# EUROPEAN PATENT APPLICATION

(11) **EP 0 686 513 A1**
(43) Date of publication of application: **13.12.1995**
(21) Application number: 94910610.8
(22) Date of filing: 02.03.1994
(51) Int. Cl.: B60B 9/28

(54) **LOCOMOTIVE ASSEMBLY FOR A TRANSPORT DEVICE AND TRANSPORT DEVICE PROVIDED WITH SUCH ASSEMBLY**

(30) Priority: 03.03.1993 RU 9311727
(71) Applicant: SAGOV, Magomet Salikhanovich, Moscow, 117463 (RU)
(72) Inventor: SAGOV, Magomet Salikhanovich, Moscow, 117463 (RU)
(74) Representative: Popp, Eugen, Dr.
(86) International application number: RU9400040
(87) International publication number: WO9420313

(57) **Abstract**

A locomotive assembly for a transport device preferably suitable for travel over rough ground, and having the shape of a "walking" wheel. The assembly includes a central member or hub (1), and supporting shoes (4) evenly spaced around the edge of the central member and joined thereto by resilient joints (5) forming the link (3) between the central member and the supporting shoes. The joints are designed in such a way that their length varies depending on the load borne thereby. In a preferred embodiment, the linking device is designed as a central member (8) and a peripheral member (9) which are resiliently and telescopically interconnected, each peripheral member being joined to the respective supporting shoe via a resilient joint (6) provided on the shoe and offset in the lengthwise direction relative to the axis thereof. A transport device provided with said locomotive assembly constitutes a structure which exerts a reduced and more compact pressure on the ground and has an improved motivity.

## Description

### Technical Field

This invention relates to a means of transportation and specifically to a propulsive part of the transportation means with high cross-country capability. The invention also relates to a walking vehicle with sequentially lifted skids.

Particularly, the invention relates to transportation wheels with ground engaging means, which are designed in the form of flat skids. This invention also relates to such a propulsive part of a transportation means which exercises a reduced tightening and structure destruction influence on the ground.

### Background Art

There is a problem of designing a propulsive part or driving means, which exercises a minimizing influence on the ground by the transportation means intended for movement on soft ground, particularly, by agriculture transportation means. This also applies to transportation means adapted for conditions of subarctic regions and deserts, i.e. transportation means which shall be characterized by high cross-country capability. The propulsive part in the form of a wheel - which is the most often used form - makes a rut in the process of movement. The ruts are harmful ecologically, and the presence of the ruts indicates to an essentially useless (to be precise wasteful) spending of the energy for disturbing the ground accompanied by its structure destruction. The power required is increased for the movement and consequently the increase of fuel consumption, increased wear and so on.

This problem is particularly critical in agriculture, where the overtightening or compaction of the ground under the influence of agricultural machines, especially of a great power and weight, leads to destruction of the soil structure which may be irreversible to some degree, and finally to soil degradation.

There was a natural aim of the inventors in such cases to use walking propulsive parts for the transportation means. Kinematic complicated systems were developed for a heavy, slow-moving transportation means such as a self-movable dredge or a drilling rig. Such systems provide for alternate lifting of the supporting base, its conveying in the lifted position in the direction of required movement and sinking onto the ground. A comparatively simple construction of the propulsive part was required for the mobile transportation means. There has been an idea which was realized to arrange the skids of a walking member on the central part of a wheel.

The German patent DE 31 61 24 (of 1914) describes the propulsive part of a transportation means designed in the form of a wheel containing skids hinged to the wheel and equally spaced on its outer perimeter and providing means for turning the skids into horizontal position when approaching the ground. In the movement of this propulsive part one skid only contacts with the ground at all times, and the contacting skid is lifted up at the moment when the next skid comes into contact with the ground.

Another invention of the same nature was described in the USSR patent SU 13009 (of 1930). According to this invention, several skids are in contact with the ground simultaneously. The skids are hinged to a wheel, equally spaced on its outer perimeter.

During the movement of the transportation means provided with such propulsive parts, the axle of the propulsive part and, consequently, the centre of gravity of the transportation means makes wave-like movement in relation to the surface of the ground.

At the time of making these inventions, low-power agriculture machines were used. The problem of increasing the cross-country capability and reducing the structure destruction influence on the ground was not so critical as it is now, so these inventions had no further development.

### Disclosure of Invention

An aim of this invention is to provide a propulsive part of a transportation means providing increased cross-country capability, in particular, in agriculture fields, and also in movement on sandy or marshy ground. Another aim of the invention is the creation of a propulsive part of a transportation means providing the reduction of a tightening and structure destruction influence on the ground and the reduction of energy consumption for the movement of the transportation means.

Another aim of the invention is the creation of a method of operating a propulsive part of a transportation means which increases the cross-country capability and reduces the energy consumption required for the movement of the transportation means.

A further aim of the invention is to provide transportation means having propulsive parts with the increased cross-country capability.

These and other objects are achieved by a propulsive part of a transportation means, using the advantages of walking coercion with the ground and providing simultaneously the practically unchanged ground clearance of. the transportation means in the process of its movement. For this purpose the propulsive part includes a central unit for connection of the propulsive part with the rest of the transportation means, a plurality of skids intended for transmission of a load from the transportation means to the ground, and means for connection of the central unit with the skids. The skids are equally spaced on the perimeter of the central unit, said means being connected with the central unit by resilient hinges and designed with the possibility of changing its length under the load. In other words, there is the possibility of changing the length between the central unit and the skids.

The propulsive part which is designed in such a way, and the transportation means having such a propulsive part, realizes the mechanism of movement of animals and human beings, but in simplified form, because the kinematics of movement of living organisms is very complicated.

The central unit may be designed in the form of the disc hub arranged on the axle of the transportation means. The central unit may be also designed in the form of arms connected with the hub, or of a rim supported by spokes. The resilient hinges connecting the central unit of the propulsive part with the means for connection of the skids may be made in the form of rubber-metal hinges, torsion bars, torsion tubes or the like.

It may be expedient that the actual particular propulsive part of a transportation means, depending on its purpose and particular use conditions, may be designed having the connection means according to the invention modified with some other connection means intended, for example, for withstanding the impact load, may be with hard connection means. Such design, if it is needed, of the propulsive part shall not be considered as limiting the invention. It is enough that at the connection means according to this invention shall be made and connected accordingly.

The technical solution disclosed above with the totality of its essential features expresses the idea of the invention fully and generally. It is possible on the basis of this disclosure to design particular embodiments of the invention using the known characteristics of materials, methods of construction and calculation. But the inventive activity is needed for the most efficient and sufficiently simple embodiments of the above mentioned technical solution. Such embodiments will be disclosed in detail.

For example, the possibility of changing the length of the connection means under the load may be achieved by designing the means in the form of a spring of conventional rigidity, of a bellows or of another construction known in the state of the art. But, taking into account conditions of use (transportation on the soft ground and consequently existence of mud, dust and so on), the best mode of designing of the connection means of the central unit with the skids provides that at least two elements be interconnected resiliently and telescopically. The one of them, which is the central one, is connected by a resilient hinge with the central unit, and the other, which is the peripheral one, is connected with the corresponding skid.

It is useful to provide the central unit with stops limiting the turn of each central element of the connection means for preventing excessive stress on the resilient hinges which connect the means with the central unit.

It was found that joining of the peripheral element of the connection means with the skid by a resilient hinge, particularly with the same structure as the one connecting the central unit with the central element of the connection means, is useful for self-regulation of the functioning of the propulsive part, as it is described below in respect of the best mode for carrying out the invention. Further, it was found that it is useful to arrange this resilient hinge on the skid in a shifted position in respect of the centre of the skid in the direction along the skid.

The adaptation of the connection means of the central unit with the skids while providing the possibility of changing its length under the load as described above, is not the only way of changing the dimension between the central unit and the skids under the load. Another possible way is by designing the connection means to consist of at least two elements of permanent dimensions interconnected with the possibility of changing the angle between them.

The above mentioned and other objects of the invention are also achieved by designing a transportation means, preferably intended for the movement on non-protected ground, comprising a propulsive part made as described above and as can be understood from the following description and the drawings.

### Brief Description of Drawings

- Fig. 1: is the general view of the propulsive part according to an embodiment of the invention.
- Fig. 2: is the construction of the means for connection of the central unit with the skid.
- Fig. 3: shows embodiments of the resilient hinges joining the connection means with the central unit and with the skid.

### Embodiment for Carrying Out the Invention

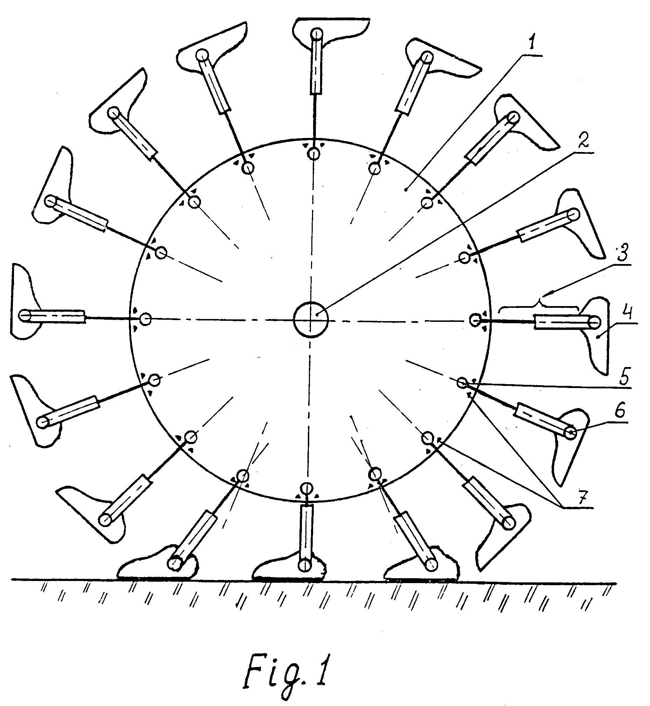

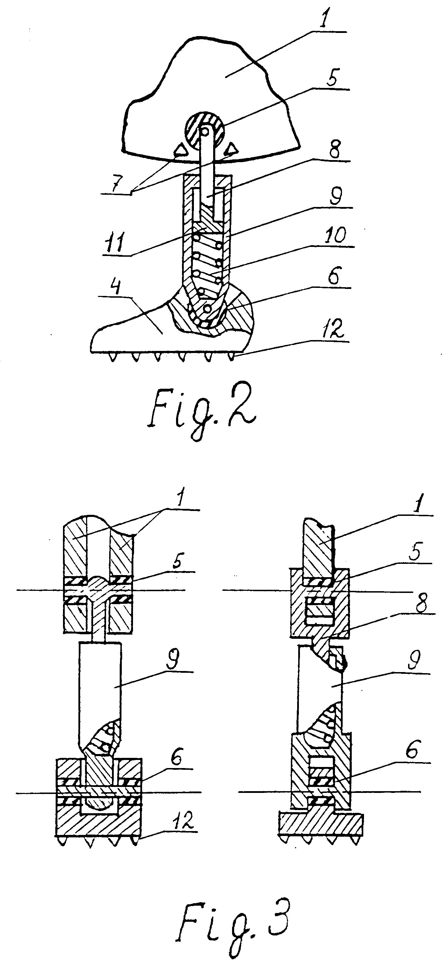

Figures 1 to 3 depict an embodiment for carrying out the propulsive part of a transportation means designed according to the invention. This embodiment of the propulsive part includes the central unit in the form of a disc hub 1 arranged on the axle 2. The means for connection 3 of the central unit with the skids 4 are equally spaced on the perimeter of the central unit. The connection means 3 are connected by their ends with the central unit 1 and the skids 4 by resilient hinges 5 and 6 respectively. The turn of the connection means in the hinges arranged on the central unit 1 is limited by the stops 7 mounted on the central unit. Angles of torsion of the resilient hinges 5 joining the connection means with the central unit, and hinges 6 joining said means with the skids, are zero in the radial position of the connection means; in other words, the resilient hinges are not torsioned in this position and no rotational momentum is applied to the connection means.

The connection means 3 in this embodiment comprise two elements, interconnected resiliently and telescopically. The one element, which is the central one, is the rod 8 connected with the central unit by the resilient hinge 5. The other element, which is the peripheral one, is the cylinder 9 connected with the skid by the resilient hinge 6. Resilient member 10, which is placed in the cylinder 9, interacts with the rod 8 through the rest 11.

The skids 4 may be provided by the gripping means 12.

The resilient hinge connecting the skid with the peripheral element - the cylinder 9 - is arranged on the skid in shifted position in respect of the centre of the area of contact of the skid with the surface of the ground. Such arrangement of the hinge allows the skid to come into contact with the surface gradually and improves the conditions of coercion with the ground.

The propulsive part for a transportation means operates as follows.

The propulsive part contacts the ground by the skids connected with the central unit through the connection means 3. These means are arranged radially in the starting position before the contact of the corresponding skid with the ground, because of their connection with the central unit through the resilient hinges 5. The skids are arranged in the position perpendicular to the axis of the cylinder 9, because of their connection with the connection means through the resilient hinges 6. The connection means have the greatest length in this position because of telescoping action of resilient member 10. In the process of rotating the propulsive part, the next skid in line begins to contact the ground surface when the length of the corresponding connection means is a maximum. The skid takes up load through the connection means from the central unit of the propulsive part, which is overhead of it, being unmovable in respect of the ground surface when the central unit rotates and the axle of the propulsive part (and the transportation means as a whole) moves translationally.

In the process of this motion the connection means 3 is shortened owing to compression of the resilient member 10, and the corresponding resilient hinges 5 and 6 on the central unit and the skid are twisted under the action of vertical and horizontal forces. As motion continues, the twisting of the resilient hinges 5 and 6 is discontinued. The hinges start to untwist and the potential energy of torsion of the hinges 5 and 6, which is stored at the previous stage, begins to transform into the kinetic energy. As a result, the propulsive part is affected by the forces providing the additional rotation momentum to compensate partially for the consumption of energy at the previous stage.

The connection means has the minimum length owing to the maximum compression of the resilient member 10 in the position of the propulsive means when the longitudinal axis of the connection means lies in the plane of axle of the central unit and the axles of resilient hinges 5 and 6.

After passing this position, the connection means begins to lengthen under the influence of the resilient member 10 and to turn in the opposite direction. The cycle will be repeated of twisting and untwisting (at this moment, in opposite directions) of the resilient hinges 5 and 6. The skid will continue to exercise its supporting function and will release contact with the ground surface only at the moment when the connection means are of maximum length and will take the radial position. Each skid will contact with the ground surface and contact it under the load for 60 to 90 angular degrees of rotation of the propulsive part.

Therefore, at least one-fourth of the general number of the skids may contact with the ground surface at the same time. The ground clearance is practically unchanging in the process of rolling of the propulsive part as a result of the adjustment of the length of the connection means. The propulsive part of a transportation means has the resilient characteristics in contact with the ground surface due to resiliency of the hinges 5 and 6 and the member 10.

### Industrial Applicability

The transportation means having the propulsive part of high cross-country capability according to this invention can be used in agriculture for the reduction of undesirable tightening influence on the ground during the agricultural treatment of arable land, and also under the conditions of movement on the weak grounds such as sand dunes and deserts or the marshy ground of subarctic and the like regions.

## Claims

1. A propulsive part suitable for transportation means including a central unit for connection of the propulsive part with the rest of the transportation means, a plurality of skids intended for transmission of a load from the transportation means to the ground, and means for connection of the said unit with the said skids, wherein at least some of the said means are connected with the central unit by resilient hinges and adapted for changing its length under the load.

2. The propulsive part for transportation means according to claim 1, wherein each means for connection of the central unit with the skid adapted for changing its length under the load consists of at least two elements, the one of them, which is central one, being connected by resilient hinge with the central unit, and the other, which is peripheral one, being connected with the corresponding skid, the central and peripheral elements being interconnected resiliently and telescopically.

3. The propulsive part for transportation means according to claim 2, wherein the central unit is made in the form of a disc hub and is provided by stops limiting the turn of each central element of the connection means hinged to the central unit.

4. The propulsive part for transportation means according to claim 2, wherein each peripheral element is connected with the skid by a resilient hinge.

5. The propulsive part for transportation means according to claim 4, wherein the resilient hinge connecting the peripheral element with the skid is arranged on the skid in shifted position in respect of the centre of the skid in the direction along the skid.

6. A transportation means, preferably intended for movement on non-protected ground, comprising a propulsive part which includes a central unit for connection of the propulsive part with the rest of the transportation means, plurality of skids intended for transmission of a load from the transportation means to the ground, and means for connection of the said unit with the said skids in the main equally spaced on the perimeter of the central unit, wherein at least some of the said means are connected with the central unit by resilient hinges and adapted for change its length under the load.

7. The transportation means according to claim 6, wherein in its propulsive part each means for connection of the central unit with the skid adapted to change its length under the load, consists of at least two elements, the one of them, which is central one, being connected by resilient hinge with the central unit, and the other, which is peripheral one, being connected with the corresponding skid, the central and peripheral elements being interconnected resiliently and telescopically.

8. The transportation means according to claim 7, wherein the central unit of the propulsive part is made in the form of a disc hub and is provided by stops limiting the turn of each central element of the connection means hinged to the central unit.

9. The transportation means according to claim 7, wherein in its propulsive part each peripheral element is connected with the skid by a resilient hinge.

10. The transportation means according to claim 9, wherein in its propulsive part the resilient hinge connecting the peripheral element with the skid is arranged on the skid in shifted position in respect of the centre of the skid in 5 the direction along the skid.
